(19) Europäisches Patentamt
European Patent Office
Office européen des brevets

(11) **EP 3 277 922 B1**

(12) **EUROPEAN PATENT SPECIFICATION**

(45) Date of publication and mention
of the grant of the patent:
**18.10.2023 Bulletin 2023/42**

(21) Application number: **15887968.4**

(22) Date of filing: **30.03.2015**

(51) International Patent Classification (IPC):
**E21B 47/107** *(2012.01)*    **G01V 1/40** *(2006.01)*
**G01V 1/48** *(2006.01)*    **E21B 47/10** *(2012.01)*
**E21B 47/00** *(2012.01)*

(52) Cooperative Patent Classification (CPC):
**G01V 1/40; E21B 47/107; G01V 1/48;**
G01V 2200/16; G01V 2210/161

(86) International application number:
**PCT/US2015/023378**

(87) International publication number:
**WO 2016/159959 (06.10.2016 Gazette 2016/40)**

(54) **ACOUSTIC SOURCE IDENTIFICATION APPARATUS, SYSTEMS, AND METHODS**

VORRICHTUNG, SYSTEME UND VERFAHREN ZUR IDENTIFIZIERUNG VON SCHALLQUELLEN

APPAREIL, SYSTÈMES ET PROCÉDÉS D'IDENTIFICATION DE SOURCE ACOUSTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2018 Bulletin 2018/06**

(73) Proprietor: **Halliburton Energy Services, Inc.**
**Houston, TX 77032-3219 (US)**

(72) Inventors:
• **CHRISTOFI, Costas**
**League City, Texas 77573 (US)**
• **WELSH, David Alan**
**League City, Texas 77573 (US)**
• **LUCAS, Federico**
**Houston, Texas 77058 (US)**

(74) Representative: **McWilliams, David John**
**Withers & Rogers LLP**
**2 London Bridge**
**London SE1 9RA (GB)**

(56) References cited:
EP-A1- 0 138 271    EP-B1- 2 297 556
WO-A2-2012/072981    US-A1- 2005 034 917
US-A1- 2005 150 299    US-A1- 2010 286 967
US-A1- 2012 120 766

• HICKLING R ET AL: "LOCATING SOUND SOURCES WITH VECTOR SOUND-ITENSITY PROBES, USING POLYNOMIAL CONTINUATION", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 100, no. 1, 1 July 1996 (1996-07-01), pages 49-56, XP000623708, ISSN: 0001-4966, DOI: 10.1121/1.416198
• WEN-QIAN JING ET AL: "Sound source localisation using a single acoustic vector sensor and multichannel microphone phased arrays", INTER NOISE 2014, 1 January 2014 (2014-01-01), XP055553374, DOI: 10.13140/2.1.1020.8961

**Description**

BACKGROUND

Understanding the structure and properties of geological formations can reduce the cost of drilling wells for oil and gas exploration. Measurements made in a borehole (i.e., downhole measurements) are typically performed to attain this understanding, as well as to identify downhole conditions, including the occurrence of leaks in the well bore. To obtain such measurements, acoustic sensors may be used. However, while some techniques for downhole leak detection exist, none provide a straightforward way to locate the depth, azimuthal angle, and strength of the source.

EP0138271A1 discloses a system for determining the subsurface position of a blowing well with respect to an adjacent relief well by detecting a number of acoustic waves emanating from the blowing well. The distance between the wells is calculated on the basis of the difference in times of arrival of the waves at axially spaced locations at the relief well. The radial direction of the blowing well relative to the relief well is determined by measuring the acoustic intensity resulting from the waves at each of said tangentially spaced locations.

WO2012/072981A2 discloses methods and apparatus for monitoring hydraulic fracturing well fracturing in well formation and fracture characterization using distributed acoustic sensing. The method involves interrogation of an optic fibre arranged down the path of a bore hole to provide a distributed acoustic sensor and monitoring flow properties of fracturing fluid pumped into the well.

BRIEF DESCRIPTION OF THE DRAWINGS

FIG. 1 is a schematic representation of neighboring acoustic sensors in accordance with various embodiments of the invention.
FIG. 2 provides a side, sectioned view of an acoustic sensor array disposed in a formation in accordance with various embodiments of the invention.
FIG. 3 is a top view of the array shown in FIG. 2.
FIG. 4 depicts an acoustic sensor array disposed in a well, with sound pressure signal measurements transformed into a map of acoustic intensity, according to various embodiments of the invention.
FIG. 5 is a graph of substantially simultaneous acoustic source time history for a seven-sensor array, according to various embodiments of the invention.
FIG. 6 is a graph of substantially simultaneous acoustic source time histories for the seven-sensor array of FIG. 5, after the array of sensors has traversed the borehole relative to the source.
FIG. 7 is a block diagram of a logging system according to various embodiments of the invention.
FIG. 8 is a flow diagram illustrating methods of acoustic source identification, according to various embodiments of the invention.
FIG. 9 depicts an example wireline system, according to various embodiments of the invention.
FIG. 10 depicts an example drilling rig system, according to various embodiments of the invention.

DETAILED DESCRIPTION

Conventional acoustic methods, including those used to detect leaks in a borehole, rely on the speed of sound to locate its source. However, the speed of sound (i.e., c) in an acoustic medium (e.g., oil- or water-based mud, water, etc.) can be cumbersome to measure, and may vary with frequency. To address some of these challenges, as well as others, apparatus, systems, and methods are described herein which operate to determine the acoustic pressure and vector particle velocity $\vec{u}$ of acoustic emissions provided by the source, with the latter being extracted via differential pressure measurements. These techniques can identify an acoustic source - both as to depth and azimuthal orientation - in a manner that is independent of the speed of sound in the medium, providing a great advantage over conventional methods. The details of various embodiments will now be described.

Acoustic intensity is defined as the time-averaged rate of acoustic energy flow though a unit area normal to the direction of propagation of sound. If there is no net flow of acoustic energy through a given area, it will be no net acoustic intensity.

In many embodiments, a wireline or MWD/LWD (measurement while drilling/logging while drilling) tool is equipped with amplitude- and phase-matched acoustic sensors (e.g., hydrophones or dynamic pressure transducers), perhaps arranged as one or more multi-dimensional acoustic sensor arrays, to identify and rank acoustic sources in a downhole operational environment. When the techniques described herein are implemented, this apparatus and others can be used to identify, locate, and rank extraneous acoustic anomalies associated with flaws in a well casing, tubing flaws, and well leaks.

To accomplish this feat, the principle of acoustic intensity, based on obtaining acoustic pressure measurements and calculating the acoustic velocity, is employed. Because acoustic intensity provides amplitude and direction information, it is useful in locating and ranking sound sources. Therefore, the advantage of this method is that at any given well depth and azimuthal orientation, the acoustic particle velocity (a vector quantity) and the acoustic pressure can be used to obtain acoustic intensity, also a vector quantity, and/or acoustic power, to identify and rank extraneous (to the measurement tool) sources in a well.

The instantaneous rate at which energy flows is the product of the acoustic sound pressure [$p$(t)] and the acoustic particle velocity [$u$(t)]. When this product is integrated over a finite, selected period of time, the result is the average energy flow, which in this case is the sound field acoustic intensity.

Acoustic intensity is a vector quantity, having a magnitude and direction, as shown in Equation 1.

$$\vec{I} = p\tilde{u} \qquad \text{(Eq. 1)}$$

Note that both acoustic intensity and acoustic velocity are vector quantities. By integrating pressure [$p$(t)] and velocity [$u$(t)] over a period of time T, the average acoustic intensity can be obtained, as shown in Equation 2.

$$I = \frac{1}{T}\int_0^T Pinst(t)u(t)dt \qquad \text{(Eq. 2)}$$

In a free-field sound environment, where sound is not reflected, the acoustic pressure and particle velocity vary simultaneously in phase with each other. In other words, a peak in particle velocity occurs at the same time as a peak in acoustic pressure. In a relatively reverberant/diffuse field the net intensity is close to zero, because the pressure is reflected several times and travels in all directions with roughly equal magnitude and probability. Although the net acoustic intensity in a reverberant field is close to zero, in theory there is a relationship of the "one-sided" acoustic intensity to the reverberant field acoustic pressure.

Equation 3 shows the relationship of the acoustic intensity magnitude as a function of the acoustic pressure in an a free field environment,

$$|I| = \frac{p^2 rms}{\rho c} \qquad \text{(Eq. 3)}$$

2 where $p^2_{rms}$ is the RMS (Root Mean Square) pressure squared, and $\rho c$ is the product of acoustic medium density and speed of sound in the medium.

Equation 4 shows the relationship of the one-sided acoustic Intensity as a function of the acoustic pressure in a reverberant/diffuse field environment,

$$I_r = \frac{p^2_{rms}}{4\rho c} \qquad \text{(Eq. 4)}$$

where $I_r$ is the "one-sided acoustic intensity" in a direction $\vec{r}$ along the measurement direction.

In the vicinity of a down-hole leak, such as a casement leak, the product of the acoustic pressure and particle velocity are expected to increase as the source of the leak approaches the measurement sensors, and to decrease as the source retreats into the distance (especially with respect to acoustic pressure). The particle velocity can be calculated by using two adjacent acoustic pressure measurement locations (e.g., neighboring hydrophones) separated by a fixed distance Δr. By utilizing Euler's equation, the acoustic velocity can be determined, as shown in Equation 5.

$$\rho \frac{\partial u}{\partial t} + \frac{\partial p}{\partial r} = 0 \qquad \text{(Eq. 5)}$$

At a point midway between the two pressure measurement locations, the particle velocity is related to the instantaneous pressure gradient by Equation 6,

$$\vec{u} = -\frac{1}{\rho} \int \frac{\partial p}{\partial r} dt \qquad \text{(Eq. 6)}$$

where $\rho$ is the density of the acoustic fluid medium. The quantity inside the integral is the pressure gradient along an arbitrary path $(\vec{r})$.

The finite-difference method can be applied to Equation 6 in order to approximate the sound pressure gradient, as shown in Equation 7.

$$\frac{\partial p}{\partial r} \cong \frac{p_2 - p_1}{\Delta r} \approx \frac{\Delta p}{\Delta r} \qquad \text{(Eq. 7)}$$

The average acoustic pressure $\bar{p}$ is equal to the algebraic average of the acoustic pressure between two adjacent acoustic sensors separated by a distance Δr (which in some embodiments represents the fixed distance between neighboring sensors in an array of substantially equally spaced hydrophones, or other acoustic sensors), as shown in Equation 8.

$$\bar{p} = \frac{p_2 + p_1}{2} \qquad \text{(Eq. 8)}$$

The acoustic particle velocity at any given depth can thus be readily determined using Equation 9.

$$\vec{u} = -\frac{1}{\rho} \int \frac{p_2 - p_1}{\Delta r} dt = -\frac{\overline{\Delta p}}{p \Delta r} = -\frac{\overline{\Delta p}}{p \Delta z} = -\frac{\overline{\Delta p}}{p \Delta \theta} \qquad \text{(Eq. 9)}$$

This initial description of how particle velocity can be determined without recourse to knowledge of the speed of sound in the associated medium sets the stage for the remainder of the discussion.

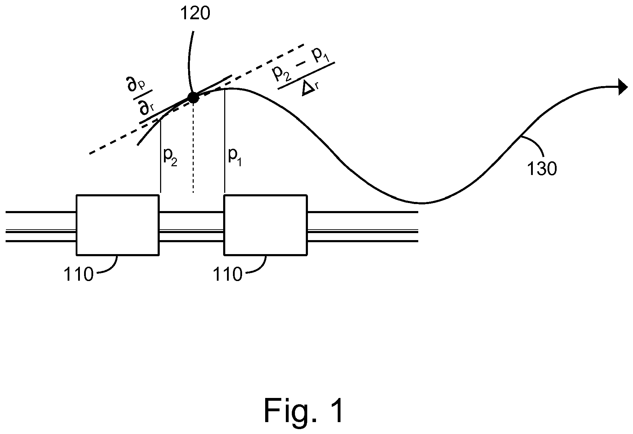

FIG. 1 is a schematic representation of neighboring acoustic sensors 110 in accordance with various embodiments of the invention. The acoustic sensors 110 can be set up in any of the following configurations, among others: (a) side-by-side, (b) front-to-front, (c) back-to-back. Here the sensors 110 are positioned to receive energy from a source 120, in the form of acoustic emissions 130. The time- and frequency-based expressions for acoustic intensity measurement and calculation, by two adjacent acoustic sensors, will now be described.

Acoustic Intensity can be formulated in the time domain and the frequency domain. In FIG. 1, a graphical depiction of the average acoustic pressure and particle velocity, is shown.

For example, to determine acoustic intensity in the time domain, Equation 9 can be used as the starting point. However, since

$$p = \frac{p_A + p_B}{2}, \text{ and } I = \overline{p \bullet u}, \text{ then}$$

$$I = -\frac{p_A + p_B}{2\rho\Delta r}\int(p_B - p_A)dt. \qquad \text{(Eq. 10)}$$

Acoustic intensity can also be determined in the frequency domain, as shown in Equation 11,

$$I = -\frac{1}{\rho\omega\Delta r}\text{Im } G_{AB} \qquad \text{(Eq. 11)}$$

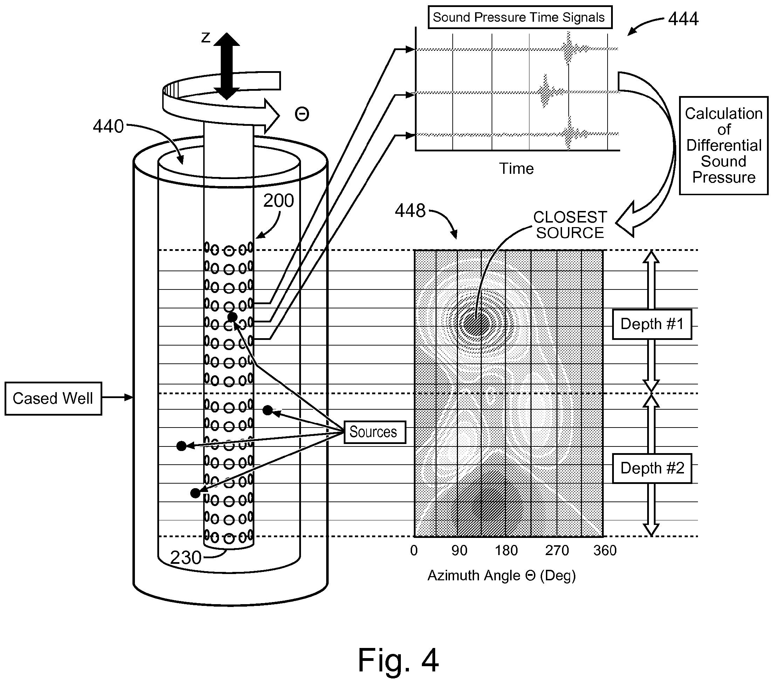

where $\omega$ is the angular frequency, and $I_m G_{AB}$ is the imaginary part of the cross spectrum between the two adjacent acoustic sensors 110. The results can be plotted on a spectral two-dimensional map as a function of frequency and amplitude, including positive and negative intensity (see FIG. 4).

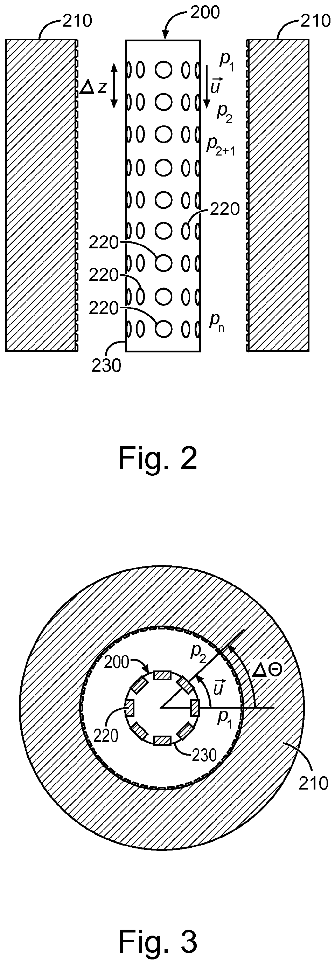

FIG. 2 provides a side, sectioned view of an acoustic sensor array 200 disposed in a formation 210 in accordance with various embodiments of the invention. The array 200 in this case comprises a number of acoustic sensors 220 attached to a downhole tool 230. The sensors 220 may be similar to or identical to the sensors 110 shown in FIG. 1. Here the sensors 220 in the array 200 are located along the axial (z) direction, and the azimuthal ($\theta$) direction, so that acoustic pressure and particle velocity in multiple directions can be determined.

A first dimension might be along the longitudinal axis z of the tool 230. As noted in Equation 9, the vector acoustic particle velocity in this case is:

$$\vec{u} = -\frac{1}{\rho}\int\frac{p_2 - p_1}{\Delta r}dt = -\frac{\overline{\Delta p}}{p\Delta z},$$

with the average pressure and acoustic velocity being measured or calculated along the tool or well longitudinal axis (z).

A second dimension might be along the circumference of the tool 230. This is understood by referring to FIG. 3, which is a top view of the array 200 shown in FIG. 2. Again, from Equation 9, the acoustic particle velocity is:

$$\vec{u} = -\frac{1}{\rho}\int\frac{p_2 - p_1}{\Delta\Theta}dt = -\frac{\overline{\Delta p}}{\rho\Delta\Theta},$$

with the average pressure and acoustic velocity being measured or calculated along the tool or well azimuthal direction ($\theta$). Taken together, FIGs. 2 and 3 demonstrate how various embodiments of an acoustic array 200, when used in conjunction with the techniques described herein, provide the ability to identify and rank acoustic sources in different directions and dimensions with respect to the body of the tool 230.

Arrays of sensors 220 can be formed in various ways. For example, the arrays may comprise linear arrays, or plane arrays. Linear arrays may be added together to form planar arrays, and planar arrays may be wrapped around a cylinder to form cylindrical arrays (e.g., the array 200 shown in FIGs. 2-3).

Acoustic radiation measurements in many embodiments are made between each sensor and its nearest neighbor, that is, between "neighboring" sensors. However, acoustic radiation measurements can also be made between a sensor and other sensors in an array, such that the distance between the sensors is fixed, albeit interrupted by the existence of other sensors. These measurement are said to be conducted between "non-neighboring" sensors. For example, in some embodiments a linear array may include ten sensors spaced approximately equidistant from each other along the direction of the array, so that in some applications measurements are made between sensors 1-2, 2-3, 3-4, 4-5, etc. (i.e., between neighboring sensors). However, in some embodiments, measurements are made between sensors 1-3, 3-5, 5-7, etc. (i.e., between non-neighboring sensors: sensors having another sensor separating them, so that they are no longer neighbors). This latter approach may be suitable when lower frequencies are used, or when a course mapping resolution is sufficient for the desired image quality.

FIG. 4 depicts an acoustic sensor array 200 disposed in a well 440, with sound pressure signal measurements 444 transformed into a map 448 of acoustic intensity, according to various embodiments of the invention. Here the tool 230 is lowered into first position (Depth #1) and sound pressure time histories (represented by the measurements 444) are recorded. All acoustic pressure measurements are taken by the array 200 substantially simultaneously, essentially freezing the measurements at the instant in time when measurement occurs. The tool 230 is then lowered to the next position (Depth #2) and the measurement process is repeated. The acoustic intensity is then determined via the formulas described earlier, and can be plotted on a spectral map 448. The map 448 shows the location and strength (closer/stronger sources of acoustic emission are shown by darker patterns on the map 448) of each extraneous acoustic source.

In some embodiments, the array 200 is configured to cover a cylindrical surface (e.g., the tool 230) so that a color surface map projection indicating the direction and magnitude of the acoustic emission intensity can be readily observed. The sensor array 200 can then be moved upward or downward along the z axis (longitudinally within the borehole 440), and the process of measuring and calculating the acoustic intensity can be repeated as often as desired, to provide varying degrees of resolution.

The raw data obtained from the sensors 220 (e.g., acoustic radiation, in the form of acoustic pressure) can be processed in real time, or post-processed to determine acoustic intensity. At each depth in the borehole, the sensor array 200 can thus be used to measure acoustic intensity in the axial (z) and circumferential (azimuthal $\theta$) directions simultaneously, without rotating the array 200.

The measurement process can be repeated at different depths to log information over the entire area of interest in the borehole 440. The downhole background noise (e.g., noise due to acoustic sources on or in the tool) can also be measured, prior to initiating the source location process. Noise that is extraneous to the tool acoustic sources may then be located and classified as an indication of a leak in the well, and used to direct corrective action by the drilling control/steering apparatus, if desired.

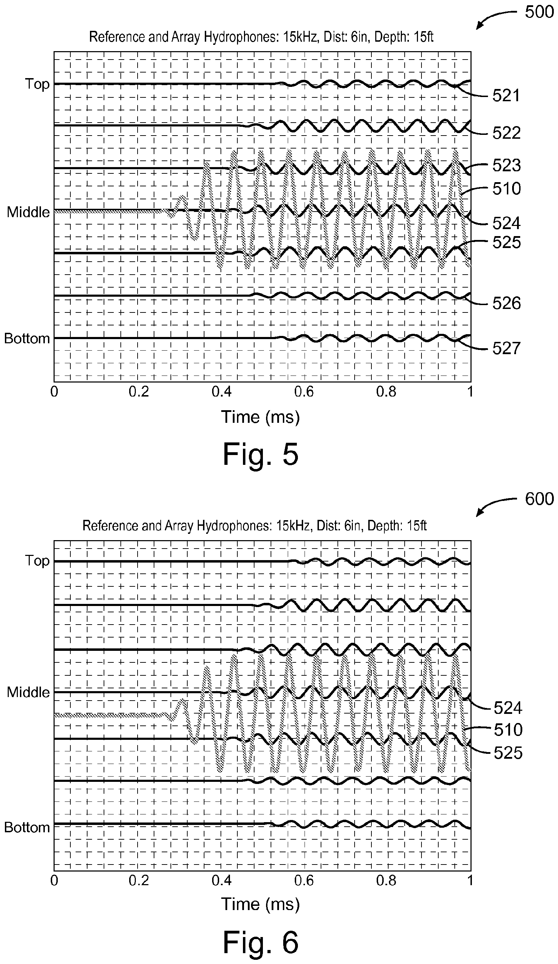

FIG. 5 is a graph 500 of substantially simultaneous acoustic source time histories for a seven-sensor array, according to various embodiments of the invention. The graph 500 can be considered similar to or identical to the graph of measurements 444 shown in FIG. 4.

Here substantially simultaneous time histories of the acoustic source 510 and seven sensors (e.g., hydrophones) 521-527 that together form a linear array are shown. In this figure it can be seen that the stationary acoustic source 510 is approximately aligned with the middle of the array - at sensor 524.

FIG. 6 is a graph 600 of substantially simultaneous acoustic source time histories for the seven-sensor array of FIG. 5, after the array of sensors 521-527 has traversed the borehole relative to the source 510. Here it can be seen that the array of sensors 521-527 has been moved downward in the borehole, so that the stationary acoustic source 510 is now located approximately between sensor 524 and sensor 525. It should be noted that the time lag between the source 510 and the array sensors 521-527 depends on how far the sensors 521-527 are from the source 510, but since the time-averaged acoustic intensity is used to locate the source 510 in various embodiments, this does not affect the results. Thus, still further embodiments may be realized.

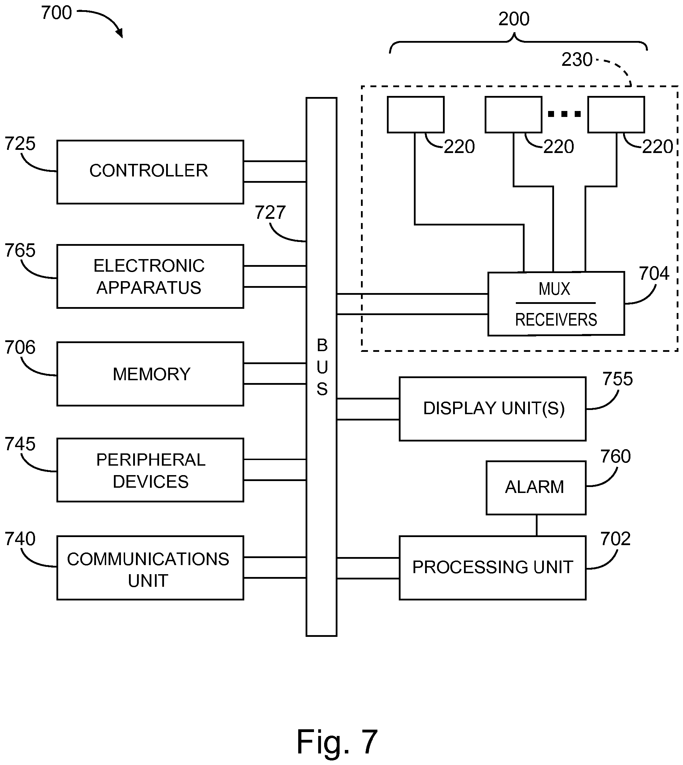

For example, FIG. 7 is a block diagram of a logging system 700 according to various embodiments of the invention. Referring now to FIGs. 1-7 it can be seen that the logging system 700 includes the apparatus illustrated in FIGs. 1-4. Here the sensors 220 are included in a down hole tool 230 and arranged to form an array 200, which may comprise a linear, planar, or cylindrical array, or some combination of these. A multiplexer and/or receivers 704 can be used to acquire signals from the sensors 220, as a measure of acoustic pressure.

Referring now to FIGs. 1-4 and 7, it can be seen that the processing unit 702 can couple to the tool 230 to obtain acoustic pressure measurements from the sensors 220 in the array 200. In some embodiments, a logging system 700 comprises one or more tools 230. The processing unit 702 may be part of a surface workstation or attached to the downhole tool 230, or disposed otherwise downhole.

The logging system 700 can include a controller 725, other electronic apparatus 765, and a communications unit 740. The controller 725 and the processing unit 702 can be fabricated to operate one or more components of the apparatus to acquire measurement data, such as acoustic radiation measurements, in the form of acoustic pressure.

Electronic apparatus 765 (e.g., acoustic sensors, electromagnetic sensors, etc.) can be used in conjunction with the controller 725 to perform tasks associated with taking acoustic and resistivity measurements downhole. The communications unit 740 can include downhole communications in a drilling operation. Such downhole communications can include a telemetry system.

The logging system 700 can also include a bus 727 to provide common electrical signal paths between the components of the logging system 700. The bus 727 can include an address bus, a data bus, and a control bus, each independently configured. The bus 727 can also use common conductive lines for providing one or more of address, data, or control, the use of which can be regulated by the controller 725.

The bus 727 can include instrumentation for a communication network. The bus 727 can be configured such that the components of the logging system 700 are distributed. Such distribution can be arranged between downhole components such as the apparatus shown in FIGs. 1-4, and 7, and components that can be disposed on the surface of a well. Alternatively, several of these components can be co-located, such as on one or more collars of a drill string or on a wireline structure.

In various embodiments, the logging system 700 includes peripheral devices that can include displays 755, additional storage memory, or other control devices that may operate in conjunction with the controller 725 or the processing unit 702. The display 755 can display measurements, calculated data, and diagnostic information based on the signals generated according to embodiments described above. The display 755 can also be used to display one or more maps 448 of acoustic intensity, and/or time history graphs 500, 600, similar to or identical to what is illustrated in FIGs. 4-6.

In an embodiment, the controller 725 can be fabricated to include one or more processors. The display 755 can be fabricated or programmed to operate with instructions stored in the processing unit 702 (for example in the memory 706) to implement a user interface to manage the operation of components distributed within the logging system 700. This type of user interface can be operated in conjunction with the communications unit 740 and the bus 727. Various components of the logging system 700 can be integrated into the associated housing (e.g., the tool 230) such that processing identical to or similar to the methods discussed with respect to various embodiments herein can be performed downhole.

In various embodiments, a non-transitory machine-readable storage device can include instructions stored thereon, which, when performed by a machine, cause the machine to become a customized, particular machine that performs operations comprising one or more activities similar to or identical to those described with respect to the methods and techniques described herein. A machine-readable storage device, herein, is a physical device that stores information (e.g., instructions, data), which when stored, alters the physical structure of the device. Examples of machine-readable storage devices include, but are not limited to, memory 706 in the form of read only memory (ROM), random access memory (RAM), a magnetic disk storage device, an optical storage device, a flash memory, and other electronic, magnetic, or optical memory devices, including combinations thereof.

The physical structure of stored instructions may thus be operated on by one or more processors such as, for example, the processing unit 702. Operating on these physical structures can cause the machine to engage in activities according to methods described herein. Operating on the instructions can cause the processing unit 702 to store associated data or other data in the memory 706. The memory 706 can store the results of measurements of formation parameters or parameters of the system 700, to include gain parameters, calibration constants, acoustic source identification data, acoustic source location data, etc. The memory 706 can store a log of the acoustic pressure measurements and acoustic intensity determined by the system 700. The memory 706 therefore may include a database, for example a relational database.

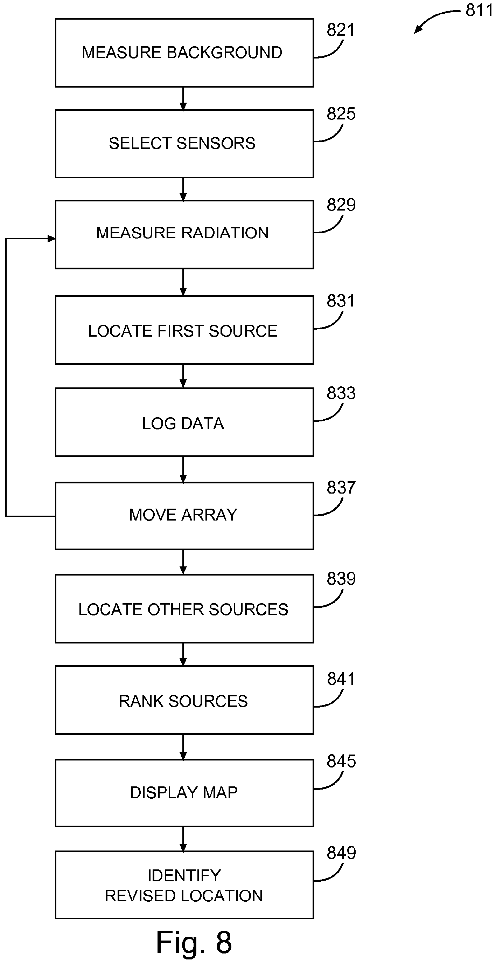

FIG. 8 is a flow diagram illustrating methods 811 of acoustic source identification, according to various embodiments of the invention. The methods 811 described herein are with reference to hardware circuitry, reception, measurements, and calculation, etc. shown in FIGs. 1-7. Some operations of the methods 811 can be performed in whole or in part by the processing unit 702 or controller 725 (FIG. 7), although many embodiments are not limited thereto.

In some embodiments, a method 811 comprises measuring acoustic radiation at block 829, and then locating the source at block 831. For the purposes of this document, a device or sensor that is located "in a geological formation" means the device/sensor is disposed at some location having coordinates within the geological formation, whether the location is inside a borehole, or outside of the borehole - within the physical structure of the Earth. Many variations may thus be realized.

For example, the method 811 may be carried out as part of a drilling operation, or a wireline logging operation. Thus, in some embodiments a method 811 may begin at block 821 with measuring background noise using one or more sensors in an array of sensors. In this way, noise that is germane to the measuring apparatus (e.g., a downhole tool) can be measured, to reduce or eliminate the effect of this noise on borehole measurements, perhaps through a subtractive process.

Neighboring (directly adjacent) sensors can be used to make measurements for higher-frequency, or fine resolution imaging. Non-neighboring sensors (i.e., sensors separated from each other along a substantially straight line, or along an azimuthal arc, by at least one other sensor) can be used to make measurements for lower-frequency, or coarse resolution imaging. Thus, in some embodiments, the method 811 may comprise, at block 825, selecting sensors in an array as one pair of multiple pairs of neighboring sensors in the array. In some embodiments, the activity at block 825 may comprise selecting sensors in the array as one pair of multiple pairs of non-neighboring sensors in the array.

The method 811 may continue on to block 829 to include substantially simultaneously measuring acoustic radiation from a first source in a geological formation, at each of at least two sensors in an array, over a selected time period to provide first acoustic pressure measurements. For the purposes of this document, "substantially simultaneously" means that the acoustic radiation data acquired as part of this activity overlaps in the time domain, such that some portion of the waveforms that can be constructed from the data are seen to exist at the same time.

Measurements of acoustic radiation can be made in multiple directions, to provide an image. Thus, the activity of substantially simultaneously measuring the acoustic radiation at block 829 may comprise substantially simultaneously measuring acoustic radiation from the first source at each of at least three sensors in an array, over the selected time period and along at least two substantially orthogonal axes (e.g., the vertical axis z, and azimuthal axis $\theta$), to provide the first acoustic pressure measurements.

The method 811 may continue on to block 831 to include locating the first source at a location in the geological formation with respect to the sensors by determining acoustic intensity associated with the first source. The determined acoustic intensity can be based on the first acoustic pressure measurements, independent of medium sound velocity in one or more media disposed between the sensors and the first source.

Acoustic intensity can be determined as a function of acoustic pressure measurements, and the acoustic particle velocity. Thus, the acoustic intensity associated with the first source can be determined as a function of an average of the first acoustic pressure measurements over the selected time period, and an acoustic particle velocity.

A variety of information that results from making acoustic radiation measurements can be recorded in a log. Thus, the method 811 may comprise, at block 833, logging the first acoustic pressure measurements or the acoustic intensity at a variety of depths in a borehole in the geological formation.

The array of sensors can be moved longitudinally within a borehole, to make multiple sets of measurements. Thus, the method 811 may continue on to block 837 to include moving the array within a borehole, from a first elevation to a second elevation, wherein the first acoustic pressure measurements are made at the first elevation.

The activities of at blocks 829 and 831 may be repeated. Indeed, any one or more of the activities shown in the method 811 may be repeated as desired. Thus, the method 811 may further include repeating the measuring (at block 829) and the locating (at block 831) at the second elevation to obtain second acoustic pressure measurements, and so on.

Other sources of extraneous acoustic emission can be located in the same way as the first source. Thus, the method 811 may comprise locating these other sources at block 839, using data acquired in any number of locations in the borehole, perhaps using a map similar to or identical to the map 448 shown in FIG. 4.

Multiple sources can be ranked against each other, based on relative acoustic signal strength, distance, or direction. Thus, the method 811 may comprise, at block 841, ranking multiple sources, including the first source, based on relative acoustic signal strength between the first source and other sources included in the multiple sources.

As noted previously, acoustic sources can be mapped. Mapping can occur with respect to location, acoustic pressure, acoustic velocity, acoustic intensity, or acoustic power versus frequency, among other source properties. Colors in the map can be used to indicate the relative magnitude of property values. Therefore some embodiments of the method 811 comprise, at block 845, displaying a color map of at least one of the location or the acoustic intensity in the geological formation in a visible format.

Multiple sets of measurements can be made to better define the initially-determined location of the source, perhaps as an average of two or more determined locations in space. Thus, the method 811, as part of the activity at block 831, or as a completely separate activity at block 849, may comprise identifying a revised version of the location and acoustic strength of the first source, based on the first acoustic pressure measurements and the acoustic pressure measurements acquired at second or subsequent locations.

It should be noted that the methods described herein do not have to be executed in the order described, or in any particular order, unless explicitly specified as such. Moreover, various activities described with respect to the methods identified herein can be executed in iterative, serial, or parallel fashion. Information, including parameters, commands, operands, and other data, can be sent and received in the form of one or more carrier waves.

Upon reading and comprehending the content of this disclosure, one of ordinary skill in the art will understand the manner in which a software program can be launched from a computer-readable medium in a computer-based system to execute the functions defined in the software program. One of ordinary skill in the art will further understand the various programming languages that may be employed to create one or more software programs designed to implement and perform the methods disclosed herein. For example, the programs may be structured in an object-orientated format using an object-oriented language such as Java or C#. In another example, the programs can be structured in a procedure-orientated format using a procedural language, such as assembly or C. The software components may communicate using any of a number of mechanisms well known to those of ordinary skill in the art, such as application program interfaces or interprocess communication techniques, including remote procedure calls. The teachings of various embodiments are not limited to any particular programming language or environment. Thus, other embodiments may be realized.

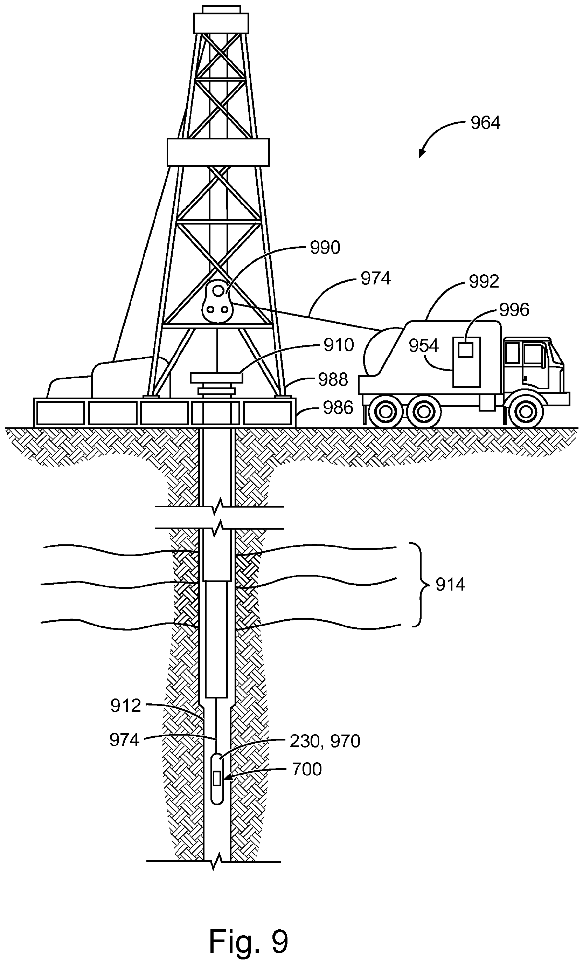

For example, FIG. 9 depicts an example wireline system 964, according to various embodiments of the invention.

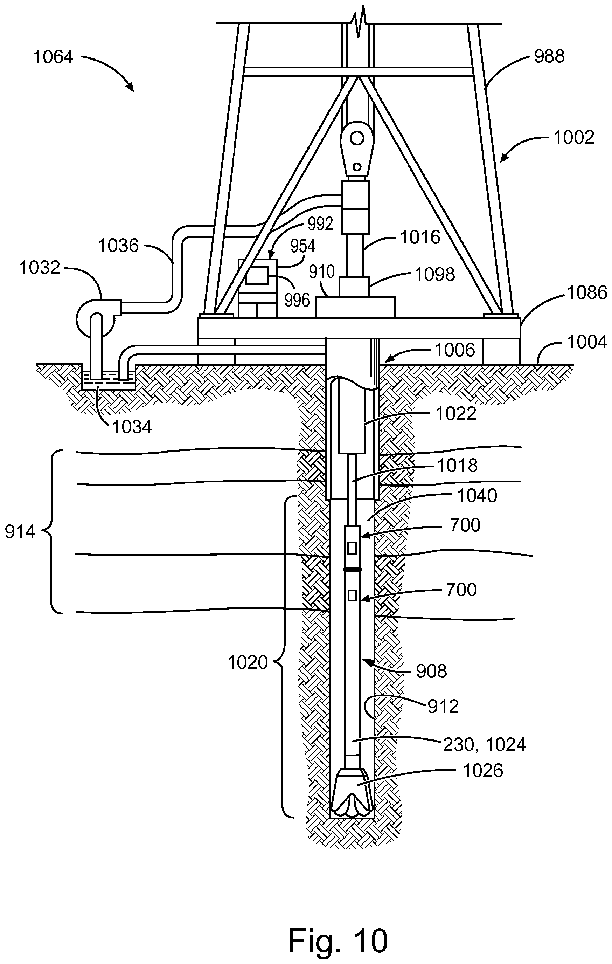

FIG. 10 depicts an example drilling rig system 1064, according to various embodiments of the invention. Either of the systems in FIG. 9 and FIG. 10 are operable to control an acoustic measurement apparatus, such as an array 200 attached to a tool 230 (see FIG. 4), to conduct measurements in a wellbore, and to locate acoustic sources. Thus, the systems 964, 1064 may comprise portions of a wireline logging tool body 970 (e.g., as a more particular implementation of a tool 230) as part of a wireline logging operation, or of a downhole tool 1024 (e.g., a drilling operations tool) as part of a downhole drilling operation. The downhole tool 1024 may be similar to or identical to the tool 230 described in other figures in more detail.

Returning now to FIG. 9, a well during wireline logging operations can be seen. In this case, a drilling platform 986 is equipped with a derrick 988 that supports a hoist 990.

Drilling oil and gas wells is commonly carried out using a string of drill pipes connected together so as to form a drilling string that is lowered through a rotary table 910 into a wellbore or borehole 912. Here it is assumed that the drilling string has been temporarily removed from the borehole 912 to allow a wireline logging tool body 970, such as a probe or sonde, to be lowered by wireline or logging cable 974 into the borehole 912. Typically, the wireline logging tool body 970 is lowered to the bottom of the region of interest and subsequently pulled upward at a substantially constant speed.

During the upward trip, at a series of depths the instruments (e.g., the apparatus and systems shown in FIGs. 2-4, and 7) included in the tool body 970 may be used to perform measurements on the subsurface geological formations adjacent the borehole 912 (and the tool body 970, which can serve as a housing for various components of the system 700). The measurement data can be communicated to a surface logging facility 992 for storage, processing, and analysis. The logging facility 992 may be provided with electronic equipment for various types of signal processing, which may be implemented by any one or more of the components of the system 700. Similar formation evaluation and downhole condition data may be gathered and analyzed during drilling operations (e.g., during LWD operations, and by extension, sampling while drilling).

In some embodiments, the tool body 970 comprises a system 700 for obtaining and analyzing acoustic radiation measurements in a borehole 912. The tool is suspended in the wellbore by a wireline cable 974 that connects the tool to a surface control unit (e.g., comprising a workstation 954, which can also include a display). The tool may be deployed in the borehole 912 on coiled tubing, jointed drill pipe, hard wired drill pipe, or any other suitable deployment technique.

Turning now to FIG. 10, it can be seen how a system 1064 may also form a portion of a drilling rig 1002 located at the surface 1004 of a well 1006. The drilling rig 1002 may provide support for a drill string 1008. The drill string 1008 may operate to penetrate the rotary table 910 for drilling the borehole 912 through the subsurface formations 914. The drill string 1008 may include a Kelly 1016, drill pipe 1018, and a bottom hole assembly 1020, perhaps located at the lower portion of the drill pipe 1018.

The bottom hole assembly 1020 may include drill collars 1022, a downhole tool 1024, and a drill bit 1026. The drill bit 1026 may operate to create the borehole 912 by penetrating the surface 1004 and the subsurface formations 1014. The downhole tool 1024 may comprise any of a number of different types of tools including MWD tools, LWD tools, and others.

During drilling operations, the drill string 1008 (perhaps including the Kelly 1016, the drill pipe 1018, and the bottom hole assembly 1020) may be rotated by the rotary table 910. Although not shown, in addition to, or alternatively, the bottom hole assembly 1020 may also be rotated by a motor (e.g., a mud motor) that is located downhole. The drill collars 1022 may be used to add weight to the drill bit 1026. The drill collars 1022 may also operate to stiffen the bottom hole assembly 1020, allowing the bottom hole assembly 1020 to transfer the added weight to the drill bit 1026, and in turn, to assist the drill bit 1026 in penetrating the surface 1004 and subsurface formations 1014.

During drilling operations, a mud pump 1032 may pump drilling fluid (sometimes known by those of ordinary skill in the art as "drilling mud") from a mud pit 1034 through a hose 1036 into the drill pipe 1018 and down to the drill bit 1026. The drilling fluid can flow out from the drill bit 1026 and be returned to the surface 1004 through an annular area 1040 between the drill pipe 1018 and the sides of the borehole 912. The drilling fluid may then be returned to the mud pit 1034, where such fluid is filtered. In some embodiments, the drilling fluid can be used to cool the drill bit 1026, as well as to provide lubrication for the drill bit 1026 during drilling operations. Additionally, the drilling fluid may be used to remove subsurface formation cuttings created by operating the drill bit 1026.

Thus, it may be seen that in some embodiments, the systems 964, 1064 may include a drill collar 1022, a downhole tool 1024, and/or a wireline logging tool body 970 to house one or more components of the system 700 in FIG. 7, which may also be attached to or housed by the tool 1024 or the tool body 970, to be constructed and operated as described previously.

Thus, for the purposes of this document, the term "housing" may include any one or more of a tool 230, a drill collar 1022, a downhole tool 1024, or a wireline logging tool body 970, all having an outer wall that is shared among a number of components. The housing can be used to enclose or attach to magnetometers, sensors, fluid sampling devices, pressure measurement devices, transceiver antennae, transmitters, receivers, acquisition and processing logic, and data acquisition systems. The tool 1024 may comprise a downhole tool, such as an LWD tool or MWD tool. The wireline tool body 970 may comprise a wireline logging tool, including a probe or sonde, for example, coupled to a logging cable 974. Many embodiments may thus be realized.

For example, referring now to FIGs. 1-10, it can be seen that an apparatus comprises at least two sensors 220 and a location processor, perhaps taking the form of a processing unit 702. In some embodiments, the apparatus comprises at least two sensors 220 forming a first portion of an array 200, with a location processor (e.g., processing unit 702) coupled to the at least two sensors. The processing unit may be operative to substantially simultaneously measure acoustic radiation from a source in a geological formation in which the array 200 is disposed, at the at least two sensors 220, over a selected time period to provide acoustic pressure measurements. The processing unit may further operate to locate the source at a location in the geological formation with respect to the sensors 220 by determining acoustic intensity associated with the source, based on the acoustic pressure measurements, independent of medium sound velocity in one or more media disposed between the sensors 220 and the source.

A linear, planar, or cylindrical array of sensors can be formed. Thus, the apparatus may comprise additional sensors (that is, in addition to the two recited previously) forming a second portion of the array and arranged longitudinally along a housing. A linear array, or single line of a cylindrical array would comprise two possible implementations of this configuration.

A circumferential arrangement of linear sensor arrays can also be formed. Thus, the apparatus might include additional sensors forming a second portion of the array and arranged azimuthally around a cylindrical housing. The cylindrical housing may comprise one of a wireline tool housing, or a downhole tool housing coupled to a drill string, among others. Still more embodiments may be realized.

For example, referring to FIGs. 4, 7, and 9-10, it can be seen that a system 700, 964, 1064 may comprise a downhole tool housing having a longitudinal axis; and sensors, such as hydrophones, attached to the housing, to operate as described previously. Thus, a system 700, 964, 1064 may include a display 755 to illustrate the location and intensity of acoustic sources.

In some embodiments, a system 700, 964, 1064 comprises hydrophone sensors 220 forming a cylindrical array 200 and a location processor (e.g., a processing unit 702) coupled to the sensors, which is operative to substantially simultaneously measure acoustic radiation from a source in a geological formation in which the array is disposed, at the sensors, over a selected time period to provide acoustic pressure measurements, and to locate the source at a location in the geological formation with respect to the sensors by determining acoustic intensity associated with the source, based on the acoustic pressure measurements, independent of medium sound velocity in one or more media disposed between the sensors and the source. The system 700, 964, 1064 may further comprise a display 755 to display a map 448 of the acoustic intensity and the location.

The sensors can be spaced approximately equidistant from each other, along one or more axes. Thus, the sensors 220 may be disposed in a central portion of the array 200 spaced approximately equally apart from each other along at least two axes (e.g., the z and $\Theta$ axes).

A multiplexer can be used to selectively switch sensors in and out of the measurement configuration. Thus, the system 700, 964, 1064 may comprise a multiplexer 704 to enable selecting non-neighboring ones of the sensors 220 to obtain acoustic pressure measurements.

Leakage into the borehole can be detected by the processor, resulting in an alarm to initiate corrective action. Thus, the system 700, 964, 1064 may comprise an alarm 760 coupled to the location processor (e.g., processing unit 702) to indicate fluid leakage into a borehole in the geological formation.

The system may include a memory to log measurements, and the calculated results of measurements. Thus, the system 700, 964, 1064 may comprise a memory 706 coupled to the location processor (e.g., the processing unit 702), wherein the memory 706 is used to store a log of the acoustic intensity corresponding to the location of the source(s).

Any of the above components, for example the elements of the systems 700, 964, 1064, may all be characterized as "modules" herein. Such modules may include hardware circuitry, and/or a processor and/or memory circuits, software program modules and objects, and/or firmware, and combinations thereof, as desired by the architect of the systems 700, 964, 1064 and as appropriate for particular implementations of various embodiments. For example, in some embodiments, such modules may be included in an apparatus and/or system operation simulation package, such as a software electrical signal simulation package, an acoustic signal propagation package, a power usage and distribution simulation package, a power/heat dissipation simulation package, a measured radiation simulation package, and/or a combination of software and hardware used to simulate the operation of various potential embodiments.

It should also be understood that the apparatus and systems of various embodiments can be used in applications other than for logging operations, and thus, various embodiments are not to be so limited. The illustrations of the systems 700, 964, 1064 are intended to provide a general understanding of the structure of various embodiments, and they are not intended to serve as a complete description of all the elements and features of apparatus and systems that might make use of the structures described herein.

In summary, using the apparatus, systems, and methods disclosed herein may utilize the principle of acoustic intensity to locate and identify downhole acoustic sources, which are extraneous to the tool. The capability to determine the axial and azimuthal location of a downhole acoustic source is novel and unique to the field, allowing operators to direct their maintenance efforts more economically and effectively when addressing well leaks. These advantages can significantly enhance the value of the services provided by an operation/exploration company, helping to reduce costs and increase customer satisfaction. A list of additional possible embodiments is now presented.

In some embodiments, an apparatus comprises an array of at least two sensors disposed in a wellbore for measuring, within a geological formation, acoustic pressure over a time period in the geological formation to obtain acoustic pressure measurements; a processor; a machine-readable storage device having instructions stored thereon, the instructions executable by the processor the cause the apparatus to, calculate acoustic velocity vectors based on the acoustic pressure measurements obtained at two adjacent sensors of the at least two sensors, the two adjacent sensors being separated by a fixed distance; determine a set of acoustic intensity vectors based on the acoustic pressure measurements and the acoustic velocity vectors corresponding to a set of one or more distances between the at least two sensors; and identify a location of an acoustic source external to the array based on the set of acoustic intensity vectors.

The array may be divided into portions, and sensors may be arranged within the portions linearly (e.g., longitudinally along a housing, or azimuthally around the housing), in a plane, or as a cylinder. The sensors may be disposed approximately equally spaced apart from each other, at any portion in the array, along one or more axes. The array may be attached to a housing, such as a wireline tool housing, or a downhole tool housing coupled to a drill string.

In some embodiments, a system comprises a cylindrical array of hydrophone sensors disposed in a wellbore located within a geological formation; a processor; a machine-readable storage device having instructions stored thereon, the instructions executable by the processor to cause the system to, measure acoustic pressure in the geological formation over a time period with the cylindrical array of hydrophone sensors to obtain acoustic pressure measurements; calculate acoustic velocity vectors based on the acoustic pressure measurements obtained at two adjacent hydrophone sensors of the hydrophone sensors, the two adjacent hydrophone sensors being separated by a fixed distance; identify a location of an acoustic source by determining a set of acoustic intensity vectors based on the acoustic pressure measurements and the acoustic velocity vectors corresponding to a set of one or more distances between the hydrophone sensors; and display a map of the set of acoustic intensity vectors or the average acoustic intensity as a function of the location of the hydrophone sensors.

The system may comprise one or more displays to display acquired data, calculated data, and one or more maps of the acoustic intensity and the location of various sources that have been located. One or more memories may be coupled to the location processor, and used to store a log of the acoustic intensity and other properties corresponding to the location of the source(s).

The system may comprise receivers and multiplexers coupled to the sensors, perhaps to enable the selection of neighboring and non-neighboring ones of the sensors to obtain the acoustic pressure measurements. Selection can be based on resolution requirements, storage limitations, or telemetry limitations, among others.

Alarms may be activated to warn of various conditions downhole. Thus, one or more alarms may be coupled to the location processor to indicate fluid leakage into a borehole in the geological formation.

Methods may comprise measuring, within a geological formation, acoustic pressure over a first time period in the geological formation with at least two sensors in an array disposed in a wellbore to obtain first acoustic pressure measurements; calculating first acoustic velocity vectors based on the first acoustic pressure measurements obtained at two adjacent sensors of the at least two sensors, the two adjacent sensors being separated by a fixed distance; determining a first set of acoustic intensity vectors in the first time period based on the first acoustic pressure measurements and the first acoustic velocity vectors corresponding to a first set of one or more distances between the at least two sensors; and identifying a location of a first acoustic source external to the array based on the set of acoustic intensity vectors.

In some embodiments, methods include ranking multiple sources, including the first source, based on relative acoustic signal strength between the first source and other sources included in the multiple sources, as well as displaying a map, including a grayscale or color map of the acoustic intensity, or some other source property, with respect to the location in a geological formation in a visible format.

The acoustic intensity associated with the first source may be determined as a function of an average of the first acoustic pressure measurements over the selected time period, and an acoustic particle velocity. Substantially simultaneously measuring the acoustic radiation may include substantially simultaneously measuring acoustic radiation from the first source at each of at least three sensors in the array, over the selected time period and along at least two substantially orthogonal axes, to provide the first acoustic pressure measurements.

In some embodiments, methods include moving the array within a borehole, from a first elevation to a second elevation, wherein the first acoustic pressure measurements are made at the first elevation; and repeating the activities of measuring and the locating at the second elevation to obtain second acoustic pressure measurements. In this way, the activity of locating may comprise identifying a revised version of the location and acoustic strength of the first source based on the first acoustic pressure measurements and the second acoustic pressure measurements.

In some embodiments, activities include measuring background noise using at least one of the at least two sensors in the array, perhaps prior to making measurements. In addition, perhaps also prior to making measurements, sensors in an array may be selected as individual pairs, out of multiple pairs of neighboring sensors in the array. Similarly, sensors may be selected as individual pairs, out of multiple pairs of non-neighboring sensors in the array. In each case, the pairs of sensors may be selected to make acoustic radiation measurements, and locate acoustic emission sources.

Any data acquired may be logged. Thus, some embodiments include the activity of logging acoustic pressure measurements, acoustic intensity, and other information at a variety of depths in a borehole in the geological formation. Many more embodiments may be realized, but have not been explicitly listed here in the interest of brevity.

The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method, comprising:

   measuring, within a geological formation, acoustic pressure over a first time period in the geological formation with at least two sensors (220) in an array (200) disposed in a wellbore to obtain first acoustic pressure measurements;
   calculating first acoustic velocity vectors based on the first acoustic pressure measurements obtained at two adjacent sensors of the at least two sensors, the two adjacent sensors being separated by a fixed distance;
   determining a first set of acoustic intensity vectors in the first time period based on the first acoustic pressure measurements and the first acoustic velocity vectors corresponding to a first set of one or more distances between the at least two sensors; and
   identifying a location of a first acoustic source external to the array based on the set of acoustic intensity vectors.

2. The method of claim 1, further comprising:
   ranking multiple sources, including the first source, based on relative acoustic signal strength between the first source and other sources included in the multiple sources.

3. The method of claim 1, further comprising:
   displaying a color map (448) of at least one of the location or the acoustic intensity in the geological formation in a visible format.

4. The method of claim 1, wherein the acoustic intensity associated with the first source is determined as a function of an average of the first acoustic pressure measurements over the selected time period, and the first acoustic velocity vectors.

5. The method of claim 1, wherein measuring the acoustic pressure comprises:
   measuring acoustic pressure from the first source at each of at least three sensors (220) in the array (200), over the selected time period and along at least two substantially orthogonal axes, to provide the first acoustic pressure measurements.

6. The method of claim 1, further comprising:

   moving the array within a borehole (440), from a first elevation to a second elevation, wherein the first acoustic pressure measurements are made at the first elevation; and

repeating the measuring and the locating at the second elevation to obtain second acoustic pressure measurements.

7. The method of claim 6, wherein the identifying the location further comprises:
identifying a revised version of the location and acoustic strength of the first source based on the first acoustic pressure measurements and the second acoustic pressure measurements.

8. The method of claim 1, further comprising:
measuring background noise using at least one of the at least two sensors (220) in the array (200).

9. The method of claim 1, further comprising:
selecting the at least two sensors (220) in the array (200) as either:

i) one pair of multiple pairs of neighboring sensors (220) in the array; or
ii) one pair of multiple pairs of non-neighboring sensors (220) in the array.

10. The method of claim 1, further comprising:
logging the first acoustic pressure measurements or the acoustic intensity at a variety of depths in a borehole (440) in the geological formation.

11. An apparatus, comprising:

an array of at least two sensors (220) disposed in a wellbore for measuring, within a geological formation, acoustic pressure over a time period in the geological formation to obtain acoustic pressure measurements;
a processor (702);
a machine-readable storage device having instructions stored thereon, the instructions executable by the processor the cause the apparatus to,

calculate acoustic velocity vectors based on the acoustic pressure measurements obtained at two adjacent sensors of the at least two sensors, the two adjacent sensors being separated by a fixed distance;
determine a set of acoustic intensity vectors based on the acoustic pressure measurements and the acoustic velocity vectors corresponding to a set of one or more distances between the at least two sensors; and
identify a location of an acoustic source external to the array based on the set of acoustic intensity vectors.

12. The apparatus of claim 11, further comprising:

additional sensors (220) forming a second portion of the array (200) and
arranged either longitudinally along a housing or azimuthally around a cylindrical housing, wherein optionally the cylindrical housing comprises one of a wireline tool housing (970), or a downhole tool housing (1024) coupled to a drill string (1008).

13. A system, comprising:

a cylindrical array of hydrophone sensors (220) disposed in a wellbore located within a geological formation;
a processor (702);
a machine-readable storage device having instructions stored thereon, the instructions executable by the processor to cause the system to,

measure acoustic pressure in the geological formation over a time period with the cylindrical array of hydrophone sensors to obtain acoustic pressure measurements;
calculate acoustic velocity vectors based on the acoustic pressure measurements obtained at two adjacent hydrophone sensors of the hydrophone sensors, the two adjacent hydrophone sensors being separated by a fixed distance;
identify a location of an acoustic source by determining a set of acoustic intensity vectors based on the acoustic pressure measurements and the acoustic velocity vectors corresponding to a set of one or more distances between the hydrophone sensors; and

display a map (448) of the set of acoustic intensity vectors or the average acoustic intensity as a function of the location of the hydrophone sensors.

14. The system of claim 13, wherein the sensors (220) disposed in a central portion of the array are approximately equally spaced apart from each other along at least two axes.

15. The system of claim 13, further comprising one or more of:

a) a multiplexer (704) to enable selecting non-neighboring ones of the sensors (220) to obtain the acoustic pressure measurements;
b) an alarm (760) coupled to the location processor (702) to indicate fluid leakage into a borehole (440) in the geological formation; and/or
c) a memory (706) coupled to the location processor (702), wherein the memory (706) is used to store a log of the acoustic intensity corresponding to the location.

**Patentansprüche**

1. Verfahren, umfassend:

Messen von Schalldruck innerhalb einer geologischen Formation über einen ersten Zeitraum in der geologischen Formation mit mindestens zwei Sensoren (220) in einer Anordnung (200), die in einem Bohrloch angeordnet sind, um erste Schalldruckmessungen zu erhalten;
Berechnen erster Schallgeschwindigkeitsvektoren basierend auf den ersten Schalldruckmessungen, die an zwei benachbarten Sensoren der mindestens zwei Sensoren erhalten werden, wobei die beiden benachbarten Sensoren durch einen festen Abstand voneinander getrennt sind;
Bestimmen eines ersten Satzes von Schallintensitätsvektoren im ersten Zeitraum basierend auf den ersten Schalldruckmessungen und den ersten Schallgeschwindigkeitsvektoren, die einem ersten Satz von einem oder mehreren Abständen zwischen den mindestens zwei Sensoren entsprechen; und
Identifizieren eines Standorts einer ersten Schallquelle außerhalb der Anordnung basierend auf dem Satz von Schallintensitätsvektoren.

2. Verfahren nach Anspruch 1, weiter umfassend:
Einordnen mehrerer Quellen, einschließlich der ersten Quelle, basierend auf einer relativen Schallsignalstärke zwischen der ersten Quelle und anderen in den mehreren Quellen beinhalteten Quellen.

3. Verfahren nach Anspruch 1, weiter umfassend:
Anzeigen einer Farbkarte (448) von mindestens einem des Standortes oder der Schallintensität in der geologischen Formation in einem sichtbaren Format.

4. Verfahren nach Anspruch 1, wobei die mit der ersten Quelle verbundene Schallintensität als eine Funktion eines Durchschnitts der ersten Schallintensitätsdruckmessungen über den ausgewählten Zeitraum und den ersten Schallgeschwindigkeitsvektoren bestimmt wird.

5. Verfahren nach Anspruch 1, wobei das Messen des Schalldrucks umfasst:
Messen des Schalldrucks von der ersten Quelle an jedem von mindestens drei Sensoren (220) in der Anordnung (200) über den ausgewählten Zeitraum und entlang mindestens zwei im Wesentlichen orthogonaler Achsen, um die ersten Schalldruckmessungen bereitzustellen.

6. Verfahren nach Anspruch 1, weiter umfassend:

Bewegen der Anordnung innerhalb eines Bohrlochs (440) von einer ersten Höhe zu einer zweiten Höhe, wobei die ersten Schalldruckmessungen auf der ersten Höhe durchgeführt werden; und
Wiederholen des Messens und Lokalisierens auf der zweiten Höhe, um zweite Schalldruckmessungen zu erhalten.

7. Verfahren nach Anspruch 6, wobei das Identifizieren des Standorts weiter umfasst:
Identifizieren einer überarbeiteten Version des Standorts und der Schallstärke der ersten Quelle basierend auf den ersten Schalldruckmessungen und den zweiten Schalldruckmessungen.

8. Verfahren nach Anspruch 1, weiter umfassend:
   Messen eines Hintergrundgeräuschs unter Verwendung von mindestens einem der mindestens zwei Sensoren (220) in der Anordnung (200).

9. Verfahren nach Anspruch 1, weiter umfassend:
   Auswählen der mindestens zwei Sensoren (220) in der Anordnung (200) als entweder:

   i) ein Paar mehrerer Paare benachbarter Sensoren (220) in der Anordnung; oder
   ii) ein Paar mehrerer Paare nicht benachbarter Sensoren (220) in der Anordnung.

10. Verfahren nach Anspruch 1, weiter umfassend:
    Protokollierung der ersten Schalldruckmessungen oder der Schallintensität in verschiedenen Tiefen in einem Bohrloch (440) in der geologischen Formation.

11. Vorrichtung, umfassend:

    eine Anordnung von mindestens zwei Sensoren (220), die in einem Bohrloch angeordnet sind, um innerhalb einer geologischen Formation den Schalldruck über einen Zeitraum in der geologischen Formation zu messen, um Schalldruckmessungen zu erhalten;
    einen Prozessor (702);
    eine maschinenlesbare Speichervorrichtung, die darauf gespeicherte Anweisungen aufweist, wobei die vom Prozessor ausführbaren Anweisungen die Vorrichtung dazu veranlassen,

    die Schallgeschwindigkeitsvektoren basierend auf den Schalldruckmessungen zu berechnen, die an zwei benachbarten Sensoren der mindestens zwei Sensoren erhalten werden, wobei die beiden benachbarten Sensoren durch einen festen Abstand voneinander getrennt sind;
    einen Satz von Schallintensitätsvektoren basierend auf den Schalldruckmessungen und den Schallgeschwindigkeitsvektoren, die einem Satz von einem oder mehreren Abständen zwischen den mindestens zwei Sensoren entsprechen, zu bestimmen; und
    einen Standort einer Schallquelle außerhalb der Anordnung basierend auf dem Satz von Schallintensitätsvektoren zu identifizieren.

12. Vorrichtung nach Anspruch 11, weiter umfassend:
    zusätzliche Sensoren (220), die einen zweiten Abschnitt der Anordnung (200) bilden und entweder in Längsrichtung entlang eines Gehäuses oder azimutal um ein zylindrisches Gehäuse herum angeordnet sind, wobei das zylindrische Gehäuse optional eines von einem Gehäuse für ein drahtgebundenes Werkzeug (970) oder ein Gehäuse für ein Schrägbohrlochwerkzeug umfasst, (1024) das an einen Bohrstrang (1008) gekoppelt ist.

13. System, umfassend:

    eine zylindrische Anordnung von Hydrophonsensoren (220), die in einem Bohrloch innerhalb einer geologischen Formation angeordnet sind;
    einen Prozessor (702);
    eine maschinenlesbare Speichervorrichtung, die darauf gespeicherte Anweisungen aufweist, wobei die vom Prozessor ausführbaren Anweisungen das System dazu veranlassen,
    den Schalldruck in der geologischen Formation über einen Zeitraum mit der zylindrischen Anordnung von Hydrophonsensoren zu messen, um Schalldruckmessungen zu erhalten;
    Schallgeschwindigkeitsvektoren basierend auf den Schalldruckmessungen zu berechnen, die an zwei benachbarten Hydrophonsensoren der Hydrophonsensoren erhalten werden, wobei die beiden benachbarten Hydrophonsensoren durch einen festen Abstand voneinander getrennt sind;
    einen Standort einer Schallquelle durch Bestimmen eines Satzes von Schallintensitätsvektoren basierend auf den Schalldruckmessungen und den Schallgeschwindigkeitsvektoren, die einem Satz von einem oder mehreren Abständen zwischen den Hydrophonsensoren entsprechen, zu identifizieren; und
    eine Karte (448) des Satzes von Schallintensitätsvektoren oder der durchschnittlichen Schallintensität als eine Funktion des Standorts der Hydrophonsensoren anzuzeigen.

14. System nach Anspruch 13, wobei die Sensoren (220), die in einem zentralen Abschnitt der Anordnung angeordnet sind, entlang mindestens zweier Achsen ungefähr gleichmäßig voneinander beabstandet sind.

**15.** System nach Anspruch 13, weiter umfassend eines oder mehrere von:

a) einem Multiplexer (704), um die Auswahl nicht Benachbarter der Sensoren (220) zu ermöglichen, um die Schalldruckmessungen zu erhalten;
b) einem Alarm (760), der mit dem Standortprozessor (702) gekoppelt ist, um Flüssigkeitslecks in einem Bohrloch (440) in der geologischen Formation anzuzeigen; und/oder
c) einem Speicher (706), der mit dem Standortprozessor (702) gekoppelt ist, wobei der Speicher (706) verwendet wird zum Speichern eines Protokolls der Schallintensität, die dem Standort entspricht.

**Revendications**

**1.** Procédé, comprenant :

la mesure, au sein d'une formation géologique, de la pression acoustique pendant une première période dans la formation géologique avec au moins deux capteurs (220) dans un réseau (200) disposés dans un puits de forage pour obtenir des premières mesures de pression acoustique ;
le calcul de premiers vecteurs de vitesse acoustique sur la base des premières mesures de pression acoustique obtenues au niveau de deux capteurs adjacents des au moins deux capteurs, les deux capteurs adjacents étant séparés par une distance fixe ;
la détermination d'un premier ensemble de vecteurs d'intensité acoustique dans la première période sur la base des premières mesures de pression acoustique et des premiers vecteurs de vitesse acoustique correspondant à un premier ensemble d'une ou de plusieurs distances entre les au moins deux capteurs ; et
l'identification d'un emplacement d'une première source acoustique externe au réseau sur la base de l'ensemble de vecteurs d'intensité acoustique.

**2.** Procédé selon la revendication 1, comprenant en outre :
le classement de multiples sources, y compris la première source, sur la base de l'intensité relative de signal acoustique entre la première source et d'autres sources incluses dans les multiples sources.

**3.** Procédé selon la revendication 1, comprenant en outre :
l'affichage d'une carte couleur (448) d'au moins l'un de l'emplacement ou de l'intensité acoustique dans la formation géologique dans un format visible.

**4.** Procédé selon la revendication 1, dans lequel l'intensité acoustique associée à la première source est déterminée en fonction d'une moyenne des premières mesures de pression acoustique pendant la période sélectionnée, et des premiers vecteurs de vitesse acoustique.

**5.** Procédé selon la revendication 1, dans lequel la mesure de la pression acoustique comprend :
la mesure de la pression acoustique à partir de la première source au niveau de chacun d'au moins trois capteurs (220) dans le réseau (200), pendant la période sélectionnée et le long d'au moins deux axes sensiblement orthogonaux, pour fournir les premières mesures de pression acoustique.

**6.** Procédé selon la revendication 1, comprenant en outre :

le déplacement du réseau à l'intérieur d'un trou de forage (440), d'une première altitude à une seconde altitude, dans lequel les premières mesures de pression acoustique sont effectuées à la première altitude ; et
la répétition de la mesure et la localisation à la seconde altitude pour obtenir des secondes mesures de pression acoustique.

**7.** Procédé selon la revendication 6, dans lequel l'identification de l'emplacement comprend en outre :
l'identification d'une version révisée de l'emplacement et de l'intensité acoustique de la première source sur la base des premières mesures de pression acoustique et des secondes mesures de pression acoustique.

**8.** Procédé selon la revendication 1, comprenant en outre :
la mesure du bruit de fond à l'aide d'au moins l'un des au moins deux capteurs (220) dans le réseau (200).

**9.** Procédé selon la revendication 1, comprenant en outre :

la sélection des au moins deux capteurs (220) dans le réseau (200) comme étant :

> i) une paire de multiples paires de capteurs voisins (220) dans le réseau ; ou
> ii) une paire de multiples paires de capteurs non voisins (220) dans le réseau.

10. Procédé selon la revendication 1, comprenant en outre :
l'enregistrement des premières mesures de pression acoustique ou de l'intensité acoustique à une variété de profondeurs dans un trou de forage (440) dans la formation géologique.

11. Appareil, comprenant :

> un réseau d'au moins deux capteurs (220) disposés dans un puits de forage pour mesurer, à l'intérieur d'une formation géologique, la pression acoustique pendant une période dans la formation géologique pour obtenir des mesures de pression acoustique ;
> un processeur (702) ;
> un dispositif de stockage lisible par machine sur lequel sont stockées des instructions, les instructions étant exécutables par le processeur pour amener l'appareil à
> calculer des vecteurs de vitesse acoustique sur la base des mesures de pression acoustique obtenues au niveau de deux capteurs adjacents des au moins deux capteurs, les deux capteurs adjacents étant séparés par une distance fixe ;
> déterminer un ensemble de vecteurs d'intensité acoustique sur la base des mesures de pression acoustique et des vecteurs de vitesse acoustique correspondant à un ensemble d'une ou de plusieurs distances entre les au moins deux capteurs ; et
> identifier un emplacement d'une source acoustique externe au réseau sur la base de l'ensemble de vecteurs d'intensité acoustique.

12. Appareil selon la revendication 11, comprenant en outre :
des capteurs supplémentaires (220) formant une seconde partie du réseau (200) et agencés soit longitudinalement le long d'un boîtier, soit azimutalement autour d'un boîtier cylindrique, dans lequel le boîtier cylindrique comprend éventuellement l'un d'un boîtier d'outil filaire (970) ou d'un boîtier d'outil de fond de trou (1024) couplé à un train de tiges (1008).

13. Système comprenant :

> un réseau cylindrique de capteurs d'hydrophones (220) disposés dans un puits de forage situé à l'intérieur d'une formation géologique ;
> un processeur (702) ;
> un dispositif de stockage lisible par machine sur lequel sont stockées des instructions, les instructions étant exécutables par le processeur pour amener le système à
> mesurer la pression acoustique dans la formation géologique pendant une période de temps avec le réseau cylindrique de capteurs d'hydrophone pour obtenir des mesures de pression acoustique ;
> calculer des vecteurs de vitesse acoustique sur la base des mesures de pression acoustique obtenues au niveau de deux capteurs d'hydrophone adjacents des capteurs d'hydrophone, les deux capteurs d'hydrophone adjacents étant séparés par une distance fixe ;
> identifier un emplacement d'une source acoustique en déterminant un ensemble de vecteurs d'intensité acoustique sur la base des mesures de pression acoustique et des vecteurs de vitesse acoustique correspondant à un ensemble d'une ou de plusieurs distances entre les capteurs d'hydrophone ; et
> afficher une carte (448) de l'ensemble des vecteurs d'intensité acoustique ou de l'intensité acoustique moyenne en fonction de l'emplacement des capteurs d'hydrophone.

14. Système selon la revendication 13, dans lequel les capteurs (220) disposés dans une partie centrale du réseau sont approximativement équidistants les uns des autres le long d'au moins deux axes.

15. Système selon la revendication 13, comprenant en outre l'un ou plusieurs parmi :

> a) un multiplexeur (704) pour permettre de sélectionner des capteurs non voisins parmi les capteurs (220) pour obtenir les mesures de pression acoustique ;
> b) une alarme (760) couplée au processeur de localisation (702) pour indiquer une fuite de fluide dans un trou de forage (440) dans la formation géologique ; et/ou

c) une mémoire (706) couplée au processeur de localisation (702), dans lequel la mémoire (706) est utilisée pour stocker un journal de l'intensité acoustique correspondant à l'emplacement.

Fig. 1

Fig. 2

Fig. 3

Fig. 4

Reference and Array Hydrophones: 15kHz, Dist: 6in, Depth: 15ft

Fig. 5

Reference and Array Hydrophones: 15kHz, Dist: 6in, Depth: 15ft

Fig. 6

Fig. 7

811

MEASURE BACKGROUND — 821

SELECT SENSORS — 825

MEASURE RADIATION — 829

LOCATE FIRST SOURCE — 831

LOG DATA — 833

MOVE ARRAY — 837

LOCATE OTHER SOURCES — 839

RANK SOURCES — 841

DISPLAY MAP — 845

IDENTIFY REVISED LOCATION — 849

Fig. 8

Fig. 9

Fig. 10

**EP 3 277 922 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0138271 A1

- WO 2012072981 A2